# FASCICULE DE BREVET EUROPEEN

(11) **EP 0 953 744 B1**
(45) Date de publication et mention de la délivrance du brevet: **25.06.2003**
(21) Numéro de dépôt: 99400705.2
(22) Date de dépôt: 23.03.1999
(51) Int. Cl.: F02B 47/08, F02M 25/07

(54) **Procédé de combustion par auto-allumage contrôle et moteur 4 temps associié avec volume de stockage de gaz résiduels et soupape dédiée**
Überwachtes Selbstzündungsverbrennungsverfahren und zugehörige 4-Takt Brennkraftmaschine mit Restgasspeichervolumen und Ventil dafür
Controlled self-ignition combustion process and associated 4 stroke combustion engine with residual gas storage volume and valve there for

(30) Priorité: 27.04.1998 FR 9805926
(43) Date de publication de la demande: 03.11.1999
(73) Titulaire: Institut Francais du Petrole, 92852 Rueil-Malmaison Cedex (FR)
(72) Inventeur: Lavy, Jacques, 78280 Guillancourt (FR)

(56) Documents cités:
- DE-A- 3 903 474
- FR-A- 2 078 819
- US-A- 3 789 807
- US-A- 4 276 865
- US-A- 4 282 845

## Description

La présente invention concerne les moteurs à combustion interne 4 temps à auto-allumage contrôlé.

L'auto-allumage contrôlé est un phénomène connu dans les moteurs 2 temps. Ce type de combustion présente des avantages au niveau des émissions de polluants : on obtient notamment de faibles émissions d'hydrocarbures et d'oxydes d'azote. En outre, une remarquable régularité cyclique est réalisée lors de la combustion en auto-allumage.

L'auto-allumage est un phénomène qui permet d'initier la combustion grâce à des gaz brûlés résiduels, qui restent dans la chambre de combustion après la combustion.

L'auto-allumage est réalisé en contrôlant la quantité de gaz résiduels et son mélange avec les gaz frais (non encore brûlés). Les gaz résiduels (gaz brûlés chauds) initient la combustion des gaz frais grâce à une combinaison de température et de présence d'espèces actives (radicaux).

Dans les moteurs 2 temps, la présence de gaz résiduels est "inhérente" à la combustion. En effet, lorsque la charge du moteur diminue, la quantité de gaz frais diminue ce qui entraîne une augmentation de la quantité des gaz résiduels (gaz brûlés du ou des cycles précédents qui ne sont pas sortis du cylindre). Le moteur 2 Temps fonctionne donc avec une recirculation interne (ou EGR interne) des gaz brûlés à charge partielle. Toutefois, la présence de cet EGR interne n'est pas suffisante pour obtenir le fonctionnement souhaité en auto-allumage. Les travaux des chercheurs montrent aussi qu'il faut contrôler et limiter le mélange entre cet EGR interne et les gaz frais.

La technologie d'auto-allumage contrôlé appliquée au moteur 4T, est particulièrement intéressante car elle permet de faire fonctionner le moteur avec un mélange extrêmement dilué, avec des richesses très faibles et des émissions de NOx ultra faibles.

Cependant cette technologie se heurte à une difficulté technologique importante qui est le fait que pour obtenir l'auto-allumage contrôlé dans un moteur 4 temps, il est nécessaire soit d'augmenter très fortement le taux de compression du moteur (avec des problèmes de cliquetis à charge élevée), soit de réchauffer très fortement (plusieurs centaines de degrés C) les gaz frais admis, soit de combiner les deux phénomènes.

Des solutions pour diminuer les exigences en niveau de pression et de température pour les moteurs 4 temps peuvent partiellement être trouvées par le biais d'additifs appropriés dans le carburant. La demande de brevet française FR 2 738 594 illustre une solution de ce type.

Pour les moteurs 4 temps il est connu, par exemple par la demande internationale PCT, WO 93/16276 de combiner un calage variable de la distribution avec un système anti-retour à l'admission dans le but de diminuer les pertes par pompage à charge partielle. Cette solution permet alors de fonctionner avec le papillon d'admission le plus ouvert possible.

La demande de brevet française EN. 97/02.822 déposée au nom de la demanderesse décrit une autre forme de contrôle de l'auto-allumage dans un moteur quatre temps. Plus précisément, ce document préconise, à charge partielle, de minimiser le mélange des gaz frais avec les gaz brûlés enfermés dans la chambre de combustion, en retardant le plus possible la fermeture de l'échappement. Il s'agit donc d'un recyclage "interne" qui permet de stratifier les gaz dans la chambre de combustion.

La demande de brevet français EN. 97/11.279 déposée au nom du Demandeur vise aussi à minimiser à charge partielle le mélange des gaz frais avec les gaz brûlés contenus dans la chambre de combustion, dans le but de contrôler et de favoriser la combustion en auto-allumage. Cependant cet art antérieur propose de transférer les gaz brûlés recyclés via un conduit spécifique qui débouche juste en amont de la chambre de combustion dans un conduit d'alimentation en air. La charge air frais-carburant est admise séparément et tardivement, via un deuxième conduit. Une introduction successive des charges est donc prévue. Cependant cette solution crée une dilution très importante des gaz brûlés, par de l'air avant l'entrée dans la chambre de combustion.

Il est également connu par le document US 4 276 865 d'utiliser les gaz d'échappement circulant dans le collecteur d'échappement pour les admettre dans une chambre de prémélange pour diminuer les émissions de polluants, tels que les NOx.

Cette disposition ne permet pas d'utiliser les gaz brûlés pour favoriser l'auto-allumage.

La présente invention prévoit une façon plus simple de réaliser, notamment à charge partielle, un auto-allumage dans un moteur à 4 temps.

Par ailleurs, la présente invention permet une fiabilité accrue par une meilleure sécurité de l'alimentation en gaz brûlés, et une moindre dilution des gaz brûlés par des gaz frais.

Ainsi la présente invention a pour objet un procédé de combustion par auto-allumage dans un moteur à combustion interne à 4 temps comprenant au moins un cylindre ayant au moins un premier moyen d'admission et au moins un premier moyen d'échappement.

Selon l'invention, le procédé consiste, à charge partielle, à enfermer des gaz brûlés volume extérieur et indépendant du cylindre, ledit volume étant relié au cylindre via un orifice et un conduit spécifique, et à contrôler le débit et/ou la pression des gaz brûlés dans ledit volume grâce à un moyen de vannage associé à un moyen d'obturation sélective de l'orifice spécifique, tel qu'une soupape, afin de réaliser une stratification entre gaz brûlés et gaz frais dans la chambre de combustion.

Conformément à l'invention, la loi de levée de la soupape spécifique est telle qu'elle s'ouvre autour de la fin de la phase d'admission.

Par ailleurs, on isole thermiquement ledit volume et le ou les conduits spécifiques.

Selon un mode de réalisation de l'invention le volume est alimenté en gaz brûlés issus uniquement dudit cylindre.

Conformément à un autre mode de réalisation de l'invention, le volume est alimenté en gaz brûlés grâce à un moteur auxiliaire dont l'échappement est relié audit volume.

En accord avec ce mode de réalisation de l'invention, la loi de levée de la soupape spécifique est telle qu'elle s'ouvre durant la phase de détente pour assurer le remplissage dudit volume en gaz brûlés.

De façon particulière, le procédé peut être utilisé dans un moteur multi-cylindrique ayant un collecteur d'échappement commun.

La présente invention concerne également un moteur à combustion interne à 4 temps fonctionnant en auto-allumage contrôlé et comprenant au moins un cylindre ayant au moins un premier moyen d'admission et au moins un premier moyen d'échappement.

De façon spécifique, le ou lesdits cylindres comprennent chacun un orifice et un conduit spécifique relié(s) à un volume extérieur au cylindre et destiné, à charge partielle, à être rempli de gaz brûlés ; un moyen de vannage étant associé à un moyen d'obturation sélective de l'orifice spécifique, tel qu'une soupape, pour commander et contrôler la pression et/ou le débit des gaz dans ledit volume, afin de réaliser une stratification entre gaz brûlés et gaz frais dans la chambre de combustion.

Le moteur selon l'invention peut en outre comprendre un moyen d'isolation thermique et/ou de chauffage de la conduite spécifique et du volume rempli de gaz brûlés.

Sans sortir du cadre de l'invention, le moteur peut comprendre en outre un moteur auxiliaire dont l'échappement est relié audit volume rempli de gaz brûlés. Plusieurs cylindres ayant un collecteur d'échappement commun sont alors prévus.

D'autres caractéristiques, détails, avantages de l'invention apparaîtront mieux à la lecture de la description qui va suivre faite à titre illustratif et nullement limitatif, en référence aux dessins annexés sur lesquels :
- La figure 1 est une coupe schématique d'un mode de réalisation de l'invention;
- La figure 2 se rapporte à la loi de levée des soupapes d'un moteur selon la figure 1;
- La figure 3 est une vue schématique simplifiée d'un autre mode de réalisation de l'invention; et
- la figure 4 concerne la loi de levée des soupapes d'un moteur selon la figure 3.

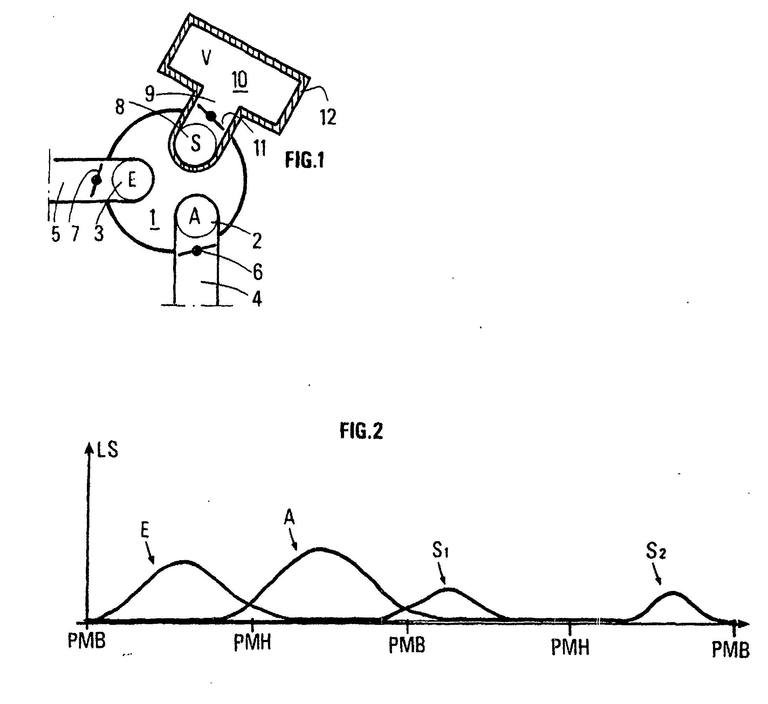

Ainsi la figure 1 est une coupe transversale schématique de la partie supérieure d'une chambre de combustion 1 d'un moteur 4 temps.

De façon connue, la chambre de combustion 1 comprend un moyen d'admission 2 et un moyen d'échappement 3. Par moyen d'admission 2, il faut comprendre l'orifice d'admission lui-même ainsi que la soupape associée, qui l'obture de façon intermittente.

De même le "moyen d'échappement" 3 comprend la lumière et la soupape associée.

Bien entendu, un conduit d'admission 4 permet d'amener la charge dans la chambre de combustion 1 où il débouche par le moyen 2.

Un conduit d'échappement 5 permet d'extraire les gaz brûlés en dehors de la chambre de combustion 1.

Un premier moyen de vannage 6 peut être disposé dans le conduit d'admission 4, à proximité du moyen 2 afin de réguler le débit des gaz ; de même, un deuxième moyen de vannage 7 peut être disposé dans le conduit d'échappement 5.

Conformément à la présente invention, un orifice spécifique 8 est prévu dans le cylindre ou la culasse, il est associé à une soupape spécifique (non référencée) et il constitue la première extrémité d'un conduit 9 qui, par son autre extrémité, débouche dans un volume 10.

Un moyen de vannage 11 peut équiper le conduit 9.

Le fonctionnement de l'invention est le suivant : la soupape spécifique s'ouvre une première fois durant la phase de détente permettant ainsi le remplissage du volume 10 par des gaz brûlés. Puis la soupape se referme lorsque la quantité souhaitée est enfermée dans le volume 10.

Ensuite, pendant la phase d'admission ou de compression, la soupape spécifique s'ouvre à nouveau pendant une période où la pression dans le cylindre est plus faible que celle du volume 10. Ceci permet le transfert des gaz brûlés du volume 10 vers le cylindre 1.

La figure 2 montre la loi de levée des différentes soupapes : la courbe E est la levée de la soupape d'échappement 3 ; la courbe A celle de la soupape d'admission 2 ; tandis que la courbe S présente deux soulèvements successifs S₁ et S₂ comme expliqué ci-avant.

De préférence, les gaz brûlés seront ré-introduits dans la chambre de combustion le plus tard possible dans le cycle afin de limiter leur mélange avec les gaz frais. En effet, une telle stratification est toujours recherchée car elle favorise le processus de combustion.

De même la came (ou autre moyen de commande du mouvement de la soupape spécifique) doit avoir une distribution variable (en amplitude, en durée, phasage) afin de contrôler au mieux les gaz brûlés emprisonnés dans le volume 10.

A cet effet, un vannage tel qu'un papillon 11 est mis en place dans le conduit 9 si la loi de levée de la soupape ne permet pas un tel contrôle du débit.

A forte charge, la soupape spécifique ne s'ouvre pas.

En outre, le volume 10 et/ou le conduit 9 pourra être isolé thermiquement par un moyen 12, afin de profiter au mieux de la température initiale des gaz brûlés pour auto-inflammer la charge fraîche. Dans le même esprit, un système de réchauffage tel qu'une résistance enroulée par exemple, peut être placé à proximité du conduit 9 et/ou du volume 10. Cette dernière solution étant consommatrice d'énergie, elle ne sera toutefois mise en oeuvre que ponctuellement.

Le mode de réalisation de l'invention qui vient d'être décrit s'applique aux moteurs monocylindres mais il peut aussi être mis en oeuvre dans des moteurs multi-cylindres où chaque cylindre comprend une soupape spécifique 8 qui coopère avec un volume 10.

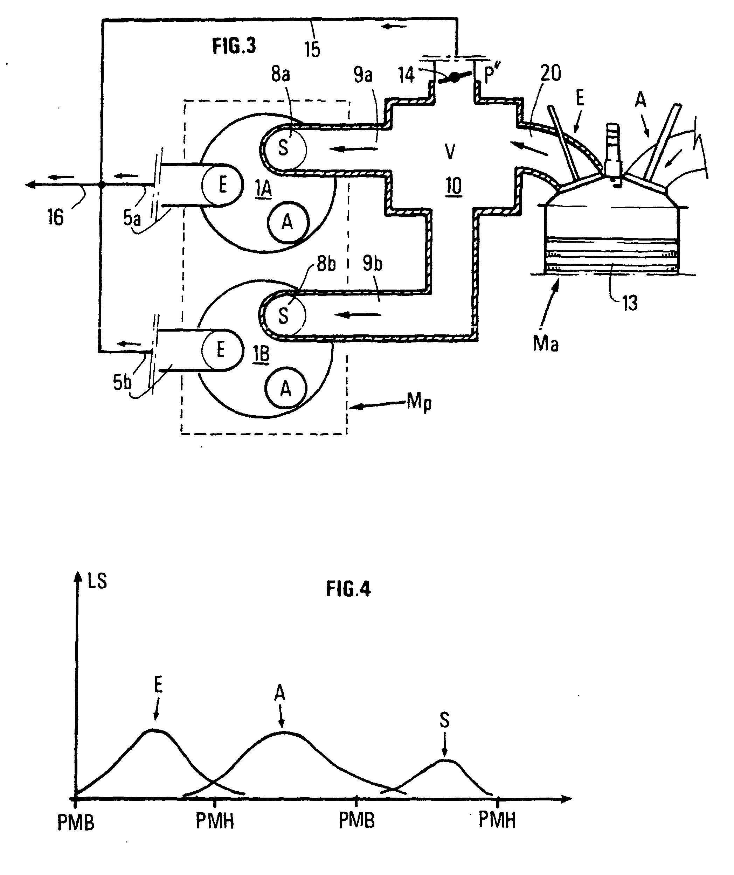

La figure 3 concerne un mode de réalisation plutôt applicable aux multi-cylindres. Il diffère du mode de réalisation qui vient d'être décrit par le fait que le volume 10 est "commun" à plusieurs cylindres 1A, 1B. En effet plusieurs conduits 9a et 9b aboutissent dans le volume commun 10.

De plus, le volume 10 est relié à la sortie échappement d'un moteur auxiliaire 13 qui alimente donc le volume 10 en gaz brûlés.

Une conduite supplémentaire 15 placée en dérivation des différents cylindres peut en outre être prévue : elle débouche par une première extrémité dans le volume 10 et par sa deuxième extrémité par exemple dans un collecteur d'échappement 16 commun à tous les cylindres 1A, 1B,...

Un moyen de vannage 14 est préférentiellement disposé près de la première extrémité de la conduite 15 afin de contrôler la pression dans le volume 10 et ainsi la quantité de gaz brûlés introduits dans les cylindres du moteur principal, notamment en phase de compression, pendant l'ouverture de chaque soupape spécifique 8a, 8b,...

Comme pour le précédent mode de réalisation, chaque soupape 8a, 8b sera préférentiellement munie d'un dispositif de distribution variable (levée, phasage) pour mieux gérer les pressions et débits. A forte charge, lorsque l'introduction de gaz brûlés n'est pas nécessaire, les soupapes dédiées ne doivent pas s'ouvrir.

La figure 4 montre les lois de levée des différentes soupapes : l'échappement suit la courbe E, c'est-à-dire s'ouvre classiquement entre le point mort bas (PMB) et le point mort haut (PMH) tandis que l'admission s'ouvre entre le point mort haut et le point mort bas. La soupape spécifique, quant à elle, s'ouvre plus tard aux alentours du point mort bas, autour de la fin de la phase d'admission.

Des moyens 12 d'isolation thermique et/ou de réchauffage peuvent aussi être prévus autour du volume 10, de la conduite 20 et des conduites spécifiques 9a, 9b.

La puissance mécanique fournie par le moteur auxiliaire 13 sera avantageusement utilisée pour entraîner des auxiliaires, un compresseur et/ou elle sera retransmise au moteur principal.

## Revendications

1. Procédé de combustion par auto-allumage dans un moteur à combustion interne à 4 temps comprenant au moins un cylindre (1) ayant au moins un premier moyen d'admission (2) et au moins un premier moyen d'échappement (3), **caractérisé en ce qu'**il consiste, à charge partielle, à enfermer des gaz brûlés dans un volume (10) extérieur et indépendant du cylindre (1), ledit volume (10) étant relié au cylindre (1) via un orifice et un conduit (9) spécifiques, et à contrôler le débit et/ou la pression des gaz brûlés dans ledit volume (10) grâce à un moyen de vannage (11 ; 14) associé à un moyen d'obturation sélective de l'orifice spécifique, tel qu'une soupape (8), afin de réaliser une stratification entre gaz brûlés et gaz frais dans la chambre de combustion.

2. Procédé de combustion selon la revendication 1, **caractérisé en ce que** la loi de levée de la soupape spécifique (8) est telle qu'elle s'ouvre autour de la fin de la phase d'admission.

3. Procédé selon l'une quelconque des revendications précédentes, **caractérisé en ce que** l'on isole thermiquement ledit volume (10) et le ou les conduits spécifiques (9).

4. Procédé selon l'une quelconque des revendications précédentes, **caractérisé en ce que** le volume (10) est alimenté en gaz brûlés issus uniquement dudit cylindre.

5. Procédé de combustion selon l'une quelconque des revendications 1 à 3, **caractérisé en ce que** ledit volume (10) est alimenté en gaz brûlés grâce à un moteur auxiliaire (13) dont l'échappement (20) est relié audit volume (10).

6. Procédé de combustion selon la revendication 5, **caractérisé en ce que** la loi de levée de la soupape spécifique (8) est telle qu'elle s'ouvre durant la phase de détente pour assurer le remplissage dudit volume (10) en gaz brûlés.

7. Procédé selon l'une quelconque des revendications 1 à 3, 5, 6, **caractérisé en ce qu'**il est utilisé dans un moteur multi-cylindre ayant un collecteur d'échappement commun (16).

8. Moteur à combustion interne à 4 temps fonctionnant en auto-allumage contrôlé et comprenant au moins un cylindre (1) ayant au moins un premier moyen d'admission (2) et au moins un premier moyen d'échappement (3), **caractérisé en ce que** le ou lesdits cylindres comprennent chacun un orifice et un conduit spécifique relié(s) à un volume (10) extérieur au cylindre (1) et destiné, à charge partielle, à enfermer des gaz brûlés et **en ce qu'**un moyen de vannage (11; 14) est associé à un moyen d'obturation sélective de l'orifice spécifique, tel qu'une soupape (8), pour commander et contrôler le débit et/ou la pression des gaz dans ledit volume (10) afin de réaliser une stratification entre gaz brûlés et gaz frais dans la chambre de combustion.

9. Moteur à combustion interne selon la revendication 8, **caractérisé en ce qu'**il comprend en outre un moyen (12) d'isolation thermique et/ou de chauffage de la conduite spécifique (9) et du volume rempli de gaz brûlés.

10. Moteur à combustion interne selon l'une quelconque des revendications 8 ou 9, **caractérisé en ce qu'**il comprend en outre un moteur auxiliaire (13) dont l'échappement (20) est relié audit volume (10) rempli de gaz brûlés.

11. Moteur à combustion interne selon l'une quelconque des revendications 8 à 10, **caractérisé en ce qu'**il comprend plusieurs cylindres ayant un collecteur d'échappement commun (16).

## Patentansprüche

1. Verfahren zur Verbrennung durch Selbstzündung in einem 4-Takt-Verbrennungsmotor, welcher wenigstens einen Zylinder (1) mit wenigstens einem ersten Einlassmittel (2) und wenigstens einem ersten Auslassmittel (3) umfasst, **dadurch gekennzeichnet, dass** es darin besteht, bei Teillast verbrannte Gase in einem äußeren und vom Zylinder (1) unabhängigen Volumen (10) einzuschließen, wobei das Volumen (10) mit dem Zylinder (1) über eine spezifische Öffnung und eine spezifische Leitung (9) verbunden ist, und den Durchsatz und/oder den Druck der verbrannten Gase in dem Volumen (10) dank eines Ventilmittels (11; 14) zu regeln, welches einem Mittel zum selektiven Verschließen der spezifischen Öffnung wie einem Ventil (8) zugeordnet ist, um eine Schichtung zwischen verbrannten Gasen und frischen Gasen in der Brennkammer zu verwirklichen.

2. Verfahren zur Verbrennung nach Anspruch 1, **dadurch gekennzeichnet, dass** das Hubgesetz des spezifischen Ventils (8) derart ist, dass es sich um das Ende der Einlassphase herum öffnet.

3. Verfahren nach einem der vorhergehenden Ansprüche, **dadurch gekennzeichnet, dass** man das Volumen (10) und die spezifische Leitung oder Leitungen (9) thermisch isoliert.

4. Verfahren nach einem der vorhergehenden Ansprüche, **dadurch gekennzeichnet, dass** das Volumen (10) mit verbrannten Gasen gespeist wird, die lediglich aus dem Zylinder stammen.

5. Verfahren zur Verbrennung nach einem der Ansprüche 1 bis 3, **dadurch gekennzeichnet, dass** das Volumen (10) an verbrannten Gasen dank eines Hilfsmotors (13) gespeist wird, dessen Auslass (20) mit dem Volumen (10) verbunden ist.

6. Verfahren zur Verbrennung nach Anspruch 5, **dadurch gekennzeichnet, dass** das Hubgesetz des spezifischen Ventils (8) derart ist, dass es sich während der Entspannungsphase öffnet, um die Füllung des Volumens (10) mit verbrannten Gasen sicherzustellen.

7. Verfahren nach einem der Ansprüche 1 bis 3, 5, 6, **dadurch gekennzeichnet, dass** es in einem Mehrzylindermotor mit einem gemeinsamen Auspuffsammler (16) verwendet wird.

8. Verbrennungsmotor mit vier Takten, der mit kontrollierter Selbstzündung arbeitet und wenigstens einen Zylinder (1) mit wenigstens einem ersten Einlassmittel (2) und wenigstens einem ersten Auslassmittel (3) umfasst, **dadurch gekennzeichnet, dass** der oder die Zylinder jeder eine Öffnung und eine spezifische Leitung umfasst, die mit einem Volumen (10) außerhalb des Zylinders (1) verbunden ist (sind) und vorgesehen ist, um bei Teillast verbrannte Gase einzuschließen und dadurch, dass ein Ventilmittel (11; 14) einem Mittel zum selektiven Verschließen der spezifischen Öffnung, wie einem Ventil (8) zugeordnet ist, um den Durchsatz und/oder den Druck der Gase in dem Volumen (10) zu steuern und zu regeln, um eine Schichtung unter verbrannten Gasen und frischen Gasen in der Brennkammer zu verwirklichen.

9. Verbrennungsmotor nach Anspruch 8, **dadurch gekennzeichnet, dass** er im Übrigen ein Mittel (12) zur thermischen Isolierung und/oder zum Heizen der spezifischen Leitung (9) und des mit verbrannten Gasen gefüllten Volumens umfasst.

10. Verbrennungsmotor nach einem der Ansprüche 8 oder 9, **dadurch gekennzeichnet, dass** er im Übrigen einen Hilfsmotor (13) umfasst, dessen Auslass (20) mit dem Volumen (10) verbunden ist, das mit verbrannten Gasen gefüllt ist.

11. Verbrennungsmotor nach einem der Ansprüche 8 bis 10, **dadurch gekennzeichnet, dass** er mehrere Zylinder mit einem gemeinsamen Auspuffsammler (16) umfasst.

## Claims

1. Process for combustion by self-ignition in a four-stroke internal combustion engine comprising at least one cylinder (1) having at least a first induction means (2) and at least a first exhaust means (3), ***characterised by** the fact that* it consists, under partial load, of containing burned gases in a volume (10) outside and independent of the cylinder (1), the said volume (10) being connected to the cylinder (1) via a specific orifice and conduit (9), and of controlling the flow rate and/or the pressure of the burned gases in the said volume (10) by means of a valving means (11; 14) associated with a means for selective closure of the specific orifice, such as a valve (8), in order to create stratification between burned gases and fresh gases in the combustion chamber.

2. Combustion process as described in claim 1, ***characterised by** the fact that* the law of lifting of the specific valve (8) is such that it opens around the end of the induction phase.

3. Process as described in any one of the preceding claims, ***characterised by** the fact that* the said volume (10) and the specific conduit or conduits (9) are thermally insulated.

4. Process as described in any one of the preceding claims, ***characterised by** the fact that* the volume (10) is supplied with burned gases only from the said cylinder.

5. Combustion process as described in any one of claims 1 to 3, ***characterised by** the fact that* the said volume (10) is supplied with burned gases by means of an auxiliary engine (13) the exhaust (20) of which is connected to the said volume (10).

6. Combustion process as described in claim 5, **characterised by** the fact that the law of lifting of the specific valve (8) is such that it opens during the expansion phase to ensure filling of the said volume (10) with burned gases.

7. Process as described in any one of claims 1 to 3, 5, 6, ***characterised by** the fact that* it is used in a multi-cylinder engine having a common exhaust manifold (16).

8. Four-stroke internal combustion engine operating with controlled self-ignition and comprising at least one cylinder (1) having at least a first induction means (2) and at least a first exhaust means (3), ***characterised by** the fact that* the said cylinder or cylinders each includes a specific orifice and conduit connected to a volume (10) external to the cylinder (1) and intended, under partial load, to contain burned gases and by the fact that a valving means (11; 14) is associated with a means for selectively closing the specific orifice, such as a valve (8), to control the flow-rate and/or pressure of the gases in the said volume (10) in order to create stratification between burned gases and fresh gases in the combustion chamber.

9. Internal combustion engine as described in claim 8, ***characterised by** the fact that* it also comprises a means (12) for thermal insulation and/or heating of the specific conduit (9) and of the volume filled with burned gases.

10. Internal combustion engine as described in any one of claims 8 or 9, ***characterised by** the fact that* it also comprises an auxiliary engine (13) the exhaust (20) of which is connected to the said volume (10) filled with burned gases.

11. Internal combustion engine as described in any one of claims 8 to 10, ***characterised by** the fact that* it comprises a plurality of cylinders having a common exhaust manifold (16).
